Europäisches Patentamt

European Patent Office

Office européen des brevets

(19)

(11) Publication number: **0 021 711**
**B1**

## EUROPEAN PATENT SPECIFICATION

(12)

(45) Date of publication of patent specification: **18.05.83**

(51) Int. Cl.³: **F 16 C 27/02**

(21) Application number: **80301949.6**

(22) Date of filing: **10.06.80**

(54) Fluid-lubricated foil bearings, and foils for such bearings.

(30) Priority: **11.06.79 US 47601**

(43) Date of publication of application:
**07.01.81 Bulletin 81/1**

(45) Publication of the grant of the patent:
**18.05.83 Bulletin 83/20**

(84) Designated Contracting States:
**AT BE CH DE FR GB IT LI LU NL SE**

(56) References cited:
**US - A - 2 366 427**

(73) Proprietor: **THE GARRETT CORPORATION**
**9851-9951 Sepulveda Boulevard P.O. Box 92248**
**Los Angeles, California 90009 (US)**

(72) Inventor: **Agrawal, Giridhari L.**
**20115 Grevillea Avenue**
**Torrance California 90503 (US)**
Inventor: **Hockey, Edward J.**
**1625 Thibodo Road**
**Vista California 92083 (US)**

(74) Representative: **Taylor, Duncan Alistair et al,**
**KILBURN & STRODE 30 John Street**
**London WC1N 2DD (GB)**

Courier Press, Leamington Spa, England.

Fluid-lubricated foil bearings, and foils for such bearings

## Field of the invention

This invention relates to fluid-lubricated foil bearings, and more particularly to foil mounting arrangements for such bearings.

## The prior art

Process fluid or gas bearings are now being used in an increasing number of applications. These fluid bearings generally comprise two relatively movable elements, such as a shaft and a bushing, with a clearance between the elements filled with a fluid such as air, which, under dynamic conditions forms a supporting wedge sufficient to prevent contact between the two relatively movable elements. In many cases, no external supply of lubricant under pressure is required, and the bearing operates purely hydrodynamically.

More recently, improved fluid bearings, particularly gas bearings, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid film lubricated bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary to pressurise the fluid between the bearing surfaces from an external source to increase the load carrying capability.

In order to keep the compliant foils in their correct positions between the relatively movable bearing elements, a number of mounting means have been devised. For example, U.S. Patent Nos. 3,366,427, 3,375,046 and 3,615,121 show a rod or bar attached to one end of the foil; this rod or bar is retained in a slot or groove in one of the relatively movable bearing elements. Alternatively, a lip or projection at one end of the foil may be restrained in a slot or groove in one of the relatively movable elements, as shown in U.S. Patent Nos. 3,511,544, 3,747,997, 3,809,443 and 3,382,014. U.S. Patent Nos. 3,382,014 and 3,809,443 also suggest mounting a plurality of overlapping foils individually on a foil base by spot welds. The base would then be frictionally held against one of the relatively movable bearing elements.

In order to ensure stability of the foils when using most of these known forms of foil mounting, a substantial pre-load is required on the foil, that is to say, the individual foils must be loaded against the relatively movable bearing element opposed to the bearing element upon which the foils are mounted. This pre-load however results in a higher starting torque and can create severe wear on the foils and also will probably reduce the net load carrying capacity of the bearing.

## Summary of the invention

According to the present invention, a fluid-lubricated bearing comprising a first member which has a bearing surface, and a second member which carries, on a surface facing the bearing surface of the first member, a plurality of overlapping, compliant foils, each foil being connected to the second member by the engagement of a projection attached to one end of the foil in a slot in the surface of the second member, is characterised in that each slot in the second member has a part-circular cross-section, of sufficient depth that the opening of the slot on to the surface of the second member is narrower than the widest part of the cross-section of the slot, and in that the projection on each foil is formed by an end portion of the foil rolled into a loop extending around at least 180° of a circle.

With such an arrangement, each foil is effectively connected to the second member by a hinge. Since the part-circular loops of the foils cannot readily escape from the slots in the second member, the amount of pre-load required on the foils is greatly reduced. In addition, the foils will tend to follow the bearing surface of the first member even at higher speeds.

With the reduced pre-load, less starting torque is required to initiate lift off of the foils from the bearing surface. The net load bearing capability of the foils is also increased as a result of the reduced pre-load. Additional advantages include better stability and the ability to withstand higher surface speeds. Since the foils follow or track better when mounted in this fashion, better damping characteristics will be present.

## Brief description of the drawing

Figure 1 is a perspective view of a foil journal bearing embodying the present invention;

Figure 2 is an enlarged end view of a journal bushing forming part of the foil bearing of Figure 1, and also shows a number of individual foil members mounted in the bushing;

Figure 3 is a partial, enlarged end view of a journal bushing forming part of an alternative form of foil journal bearing, incorporating individual foil members and separate stiffener elements; and

Figure 4 is a perspective, partially exploded view of a foil thrust bearing embodying the present invention.

Detailed description of the preferred embodiments

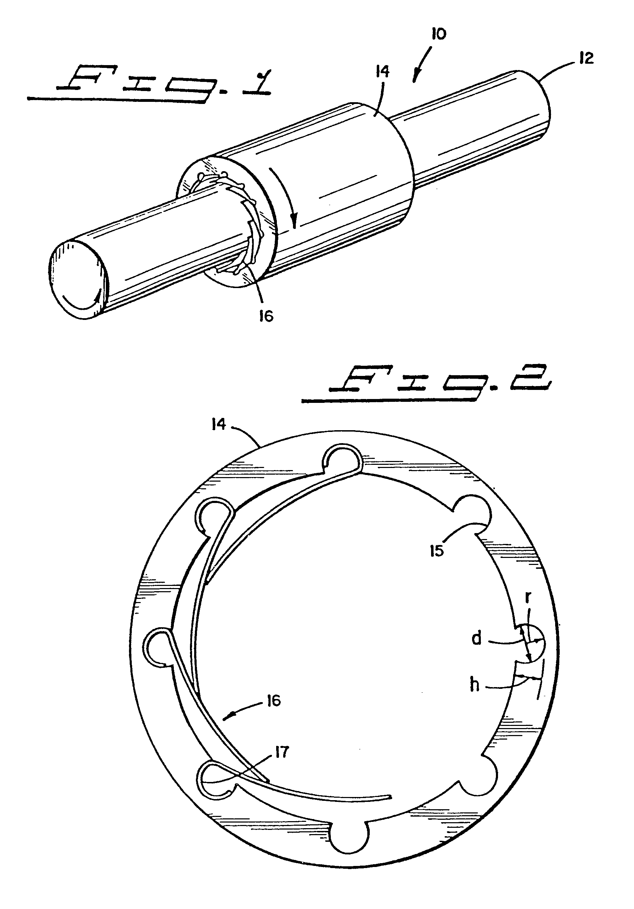

Referring now to Figure 1, there is illustrated a foil journal bearing 10 having a shaft 12 rotatably borne in a bushing 14. Disposed between the shaft 12 and the bushing 14 are a plurality of individual, overlapping arcuate bearing foils 16. Arrows on the end of the shaft 12 and the exterior of the bushing 14 indicate the direction of relative rotation between the shaft and the bushing. It is not necessary that both the shaft and the bushing should rotate; one or other of the shaft or the bushing may be stationary. It is only necessary for correct operation of the bearing that the relative rotation between the shaft and the bushing should be in the direction indicated.

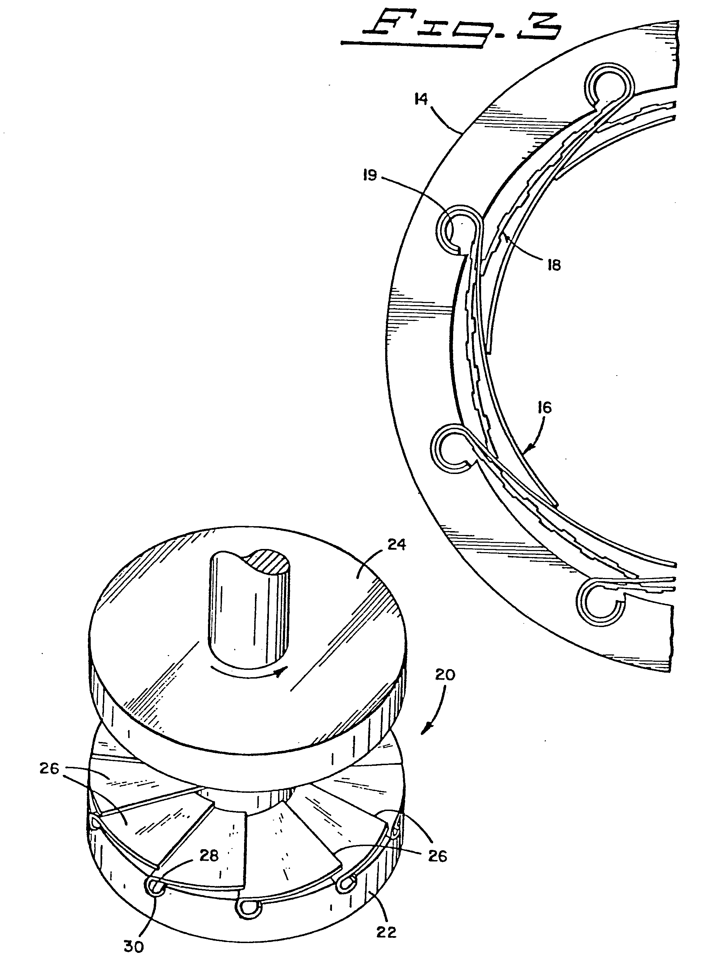

As more clearly illustrated in Figure 2, the bushing 14 on its inner surface includes a plurality, in this example eight, of uniformly spaced slots 15, each extending parallel to the axis of the bushing 14. The cross-section of each slot 15 is bounded, except where the slot opens into the bore of the bushing 14, by a circular arc of radius $r$, whose angular extent is rather more than 180° of a circle, although less than 360°. In other words, the depth $h$ of the slot 15 is less than the diameter $d$ of the circular arc, but is greater than the radius $r$.

Each individual bearing foil 16 is formed of a thin, compliant, metallic material. At one end of each bearing foil 16, the material of the foil is rolled to form a part-cylindrical loop 17 which is pivotably received in one of the slots 15 of the bushing 14. The loop 17 can be snapped into or slid into the slot 15 when the bearing is assembled. The outer diameter of the loop 17 is slightly less than the diameter of the circular slot 15, so that the foil 16 is free to pivot, with the loop 17 rotating within the slot 15, without undue force being required. A mild interference fit between the loops 17 and slots 15 is contemplated. In order that the loops 17 should be captive in the slots 15, the loops 17 extend around at least 180° of a circle.

In the alternative form of bearing shown in Figure 3, each foil 16 is associated with a stiffener or underfoil 18, the underfoil 18 having alternate grooves and ridges so as to provide both a bending and a compressive mode of operation. Such stiffening elements are described in more detail in U.S. Patent No. 4,153,315. Each stiffener 18 includes a rolled loop 19 which is disposed within the loop 17 of the associated foil 16, so that the foil and stiffener can pivot independently within the circular slot 15 of the bushing 14.

While the embodiments of Figures 1, 2 and 3 are both journal bearings, it should be recognized that the invention is also applicable to other types of foil bearing, for example, thrust bearings and conical bearings. Figure 4 illustrates a foil thrust bearing 20 embodying the invention. The foil thrust bearing 20 includes a thrust plate 22 and a thrust runner 24, and, positioned between the thrust plate 22 and the thrust runner 24, a plurality of individual, overlapping bearing foils 26. In operation, relative rotation occurs between the thrust plate 22 and the thrust runner 24 in the direction indicated by an arrow on the thrust runner 24. Each individual foil 26 includes a part-circular loop 28 adapted to be mounted within a corresponding part-circular slot 30 in the thrust plate 22 in the same manner as described in detail with respect to the journal bearing figures.

**Claims**

1. A fluid-lubricated bearing comprising a first member (12, 24) which has a bearing surface, and a second member (14, 22) which carries, on a surface facing the bearing surface of the first member, a plurality of overlapping, compliant foils (16, 26), each foil being connected to the second member by the engagement of a projection attached to one end of the foil in a slot (15, 30) in the surface of the second member, characterised in that each slot (15, 30) in the second member (14, 22) has a part-circular cross-section, of sufficient depth that the opening of the slot (15, 30) on to the surface member is narrower than the widest part of the cross-section of the slot (15, 30) and in that the projection on each foil (16, 26) is formed by an end portion of the foil rolled into a loop (17, 28) extending around at least 180° of a circle.

2. A bearing as claimed in Claim 1 which also includes, for each foil (16) a foil stiffening element (18) which is retained in place by an end portion (19) thereof, which is rolled into a part-circular loop, this loop being received within the part-circular loop (18) of the associated foil (16).

3. A bearing as claimed in any of the preceding claims in which each loop and slot constitutes a pivotal connection of its foil to the second member.

4. A bearing as claimed in any of the preceding claims wherein the first member is a shaft (12) with the foils constituting a journal bearing surface for the shaft.

5. A bearing as claimed in any of Claims 1— 3 wherein the first member is a flange (24) with the foils constituting a thrust bearing surface for the flange.

6. A foil for use in a bearing as claimed in any of the preceding claims comprising a sheet of compliant metallic material in which the edge at one side is rolled up into a loop extending around at least 180° of a circle.

## Patentansprüche

1. Fluidgeschmiertes Lager mit einem ersten Bauteil (12, 24), das eine Lagerfläche besitzt, und einem zweiten Bauteil (14, 22), das auf einer der Lagerfläche des ersten Bauteiles zugewandten Oberfläche eine Vielzahl von sich überlappenden, nachgiebigen Folien (16, 26) aufweist, wobei jede Folie mit dem zweiten Bauteil durch Eingriff eines Ansatzes verbunden ist, der mit einem Ende der Folie in einen Schlitz (15, 30) in der Oberfläche des zweiten Bauteiles verbunden ist, dadurch gekennzeichnet, daß jeder Schlitz (15, 30) im zweiten Bauteil (14, 22) einen teilkreisförmigen Querschnitt solcher Tiefe aufweist, daß die Öffnung des Schlitzes (15, 30) zum Oberflächenbauteil schmaler ist als der breiteste Teil des Querschnittes des Schlitzes (15, 30), und daß der Ansatz an jeder Folie (16, 26) durch ein Endteil der Folie gebildet ist, das zu einer Schleife (17, 28) gerollt ist, die sich über mindestens 180° eines Kreises erstreckt.

2. Lager nach Anspruch 1, dadurch gekennzeichnet, daß für jede Folie (16) ein Folienverstärkungselement (18) vorgesehen ist, das durch ein Endteil (19) in seiner Position gehalten wird und das zu einer teilkreisförmigen Schleife gerollt ist, welche in der teilkreisförmigen Schleife (18) der zugeordneten Folie (16) aufgenommen ist.

3. Lager nach Anspruch 1 oder 2, dadurch gekennzeichnet, daß jeweils Schleife und Schlitz eine Schwenkverbindung der Folie mit dem zweiten Bauteil bilden.

4. Lager nach einem der Ansprüche 1—3, dadurch gekennzeichnet, daß das erste Bauteil eine Welle (12) ist, und daß die Folien eine Achslagerfläche für die Welle darstellen.

5. Lager nach einem der Ansprüche 1—3, dadurch gekennzeichnet, daß das erste Bauteil ein Flansch (24) ist und daß die Folien eine Drucklagerfläche für den Flansch darstellen.

6. Folie zur Verwendung in einem Lager nach einem der vorausgehenden Ansprüche, gekennzeichnet durch eine Schicht aus nachgiebigem, metallischem Material, in welchem der Rand auf einer Seite zu einer Schleife aufgerollt ist, die sich um mindestens 180° eines Kreises erstreckt.

## Revendications

1. Un palier lubrifié par fluide, comportant un premier organe (12, 24) qui possède une surface de portage, et un second organe (14, 22) qui supporte, sur une surface tournée vers la surface de portage du premier organe, plusieurs feuilles élastiques en recouvrement (16, 26), chaque feuille étant couplée au second organe par l'engagement d'une saillie fixée sur une extrémité de la feuille dans une fente (15, 30) dans la surface du second organe, caractérisé en ce que chaque fente (15, 30) dans le second organe (14, 22) possède une section transversale partiellement circulaire, de profondeur suffisante pour que l'ouverture de la fente (15, 30) sur la surface du second organe soit plus étroite que la partie la plus large de la section transversale de la fente (15, 30), et en ce que la saillie sur chaque feuille (16, 26) est formée par une partie extrême de la feuille roulée pour former une boucle (17, 28) qui s'étend suivant au moins 180° d'un cercle.

2. Un palier tel que revendiqué dans la revendication 1, qui comprend aussi, pour chaque feuille (16), un élément raidisseur (18) de feuille qui est retenu en place par une de ses parties extrêmes (19), qui est roulée pour former une boucle partiellement circulaire, cette boucle étant reçue à l'intérieur de la boucle partiellement circulaire (18) de la feuille associée (16).

3. Un palier tel que revendiqué dans l'une quelconque des revendications précédentes, dans lequel chaque boucle et fente constitue une connexion pivotante de la feuille avec le second organe.

4. Un palier tel que revendiqué dans l'une quelconque des revendications précédentes, dans lequel le premier organe est un arbre (12), les feuilles constituant une surface de palier de fusée pour l'arbre.

5. Un palier tel que revendiqué dans l'une quelconque des revendications 1 à 3, dans lequel le premier organe est une collerette (24), les feuilles constituant une surface de palier de butée pour la collerette.

6. Une feuille destinée à être utilisée dans un palier tel que revendiqué dans l'une quelconque des revendications précédentes, comportant une feuille de matériau métallique élastique dans laquelle le bord, d'un côté, est roulé pour former une boucle s'étendant suivant au moins 180° d'un cercle.

Fig. 1

Fig. 2

*Fig.3*